(19) Europäisches Patentamt
European Patent Office
Office européen des brevets

(11) EP 3 817 114 B1

(12) **EUROPEAN PATENT SPECIFICATION**

(45) Date of publication and mention of the grant of the patent:
**02.09.2026 Bulletin 2026/36**

(21) Application number: **19827391.4**

(22) Date of filing: **28.06.2019**

(51) International Patent Classification (IPC):
***H01M 8/1058*** *(2016.01)* ***H01M 8/1053*** *(2016.01)*
***H01M 8/1067*** *(2016.01)* ***H01M 8/1081*** *(2016.01)*
***H01M 8/1004*** *(2016.01)* ***H01M 8/1018*** *(2016.01)*
***H01M 8/1062*** *(2016.01)* ***H01M 8/1039*** *(2016.01)*

(52) Cooperative Patent Classification (CPC):
**H01M 8/1062; H01M 8/1039; H01M 8/1053; H01M 8/1058; H01M 8/1067; H01M 8/1081;**
Y02E 60/50; Y02P 70/50

(86) International application number:
**PCT/KR2019/007904**

(87) International publication number:
**WO 2020/005018 (02.01.2020 Gazette 2020/01)**

(54) **POLYMER ELECTROLYTE MEMBRANE, MANUFACTURING METHOD THEREFOR, AND MEMBRANE ELECTRODE ASSEMBLY COMPRISING SAME**

POLYMERELEKTROLYTMEMBRAN, HERSTELLUNGSVERFAHREN DAFÜR UND MEMBRANELEKTRODENANORDNUNG DAMIT

MEMBRANE ÉLECTROLYTIQUE POLYMÈRE, SON PROCÉDÉ DE FABRICATION ET ENSEMBLE ÉLECTRODE-MEMBRANE LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2018 KR 20180076004**

(43) Date of publication of application:
**05.05.2021 Bulletin 2021/18**

(73) Proprietor: **Kolon Industries, Inc.**
**Seoul 07793 (KR)**

(72) Inventors:
- **KIM, Na Young**
  **Seoul 07793 (KR)**
- **LEE, Moo Seok**
  **Seoul 07793 (KR)**
- **LEE, Dong Hoon**
  **Seoul 07793 (KR)**
- **LEE, Eun Su**
  **Seoul 07793 (KR)**
- **YUM, Seung Jib**
  **Seoul 07793 (KR)**
- **PARK, Jung Hwa**
  **Seoul 07793 (KR)**

(74) Representative: **Vossius & Partner Patentanwälte Rechtsanwälte mbB**
**Siebertstraße 3**
**81675 München (DE)**

(56) References cited:
**KR-A- 20110 006 122**
**KR-A- 20140 046 213**
**KR-A- 20140 085 885**
**KR-A- 20170 003 479**
**US-A1- 2003 059 657**
**US-A1- 2007 087 245**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

[Technical Field]

The present disclosure relates to a polymer electrolyte membrane, a method of manufacturing the same, and a membrane-electrode assembly including the same, and more particularly to a polymer electrolyte membrane configured such that impregnation of the polymer electrolyte membrane is improved, whereby performance of the polymer electrolyte membrane is improved, hydrogen crossover and dimensional change of the polymer electrolyte membrane are minimized, whereby mechanical and chemical durabilities of the polymer electrolyte membrane are improved, and the interface between an ion conductor and a support is stably maintained for a long time, a method of manufacturing the same, and a membrane-electrode assembly including the same.

[Background Art]

A fuel cell, which is a cell including a power generation system for directly converting chemical reaction energy into electrical energy through an oxidation/reduction reaction of hydrogen and oxygen contained in a hydrocarbon-based fuel material, such as methanol, ethanol, or natural gas, has attracted attention as a next-generation clean energy source that is capable of replacing fossil energy due to the environmentally friendly characteristics thereof, such as high energy efficiency and reduced discharge of contaminants.

Such a fuel cell has an advantage in that unit cells are stacked to constitute a stack, whereby it is possible to provide various levels of power. In addition, the fuel cell has energy density 4 to 10 times that of a small-sized lithium battery, whereby the fuel cell has attracted attention as a small-sized power source or a mobile power source.

The stack of the fuel cell, which substantially generates electricity, has a structure in which several to several tens of unit cells, each of which includes a membrane-electrode assembly (MEA) and a separator (also referred to as a bipolar plate), are stacked, and the membrane-electrode assembly is generally configured to have a structure in which an oxidation electrode (an anode or a fuel electrode) and a reduction electrode (a cathode or an air electrode) are formed at opposite sides of an electrolyte membrane with the electrolyte membrane disposed therebetween.

The fuel cell may be classified as an alkaline electrolyte membrane fuel cell or a polymer electrolyte membrane fuel cell (PEMFC) depending on the state and kind of an electrolyte. The polymer electrolyte membrane fuel cell has attracted attention as a mobile power source, a power source for vehicles, and a power source for home use due to a low operating temperature lower than 100°C, rapid starting and response characteristics, and excellent durability thereof.

Representative examples of the polymer electrolyte membrane fuel cell may include a proton exchange membrane fuel cell (PEMFC), which uses hydrogen gas as fuel, and a direct methanol fuel cell (DMFC), which uses liquid methanol as fuel.

The reaction that occurs in the polymer electrolyte membrane fuel cell will be described in brief. First, when fuel such as hydrogen gas is supplied to the oxidation electrode, protons ($H^+$) and electrons ($e^-$) are generated at the oxidation electrode as the result of the oxidation reaction of hydrogen. The generated protons are transferred to the reduction electrode via a polymer electrolyte membrane, and the generated electrons are transferred to the reduction electrode via an external circuit. Oxygen is supplied from the reduction electrode, and the oxygen is bonded with the protons and the electrons, whereby water is generated through the reduction reaction of the oxygen.

Meanwhile, there are many technical problems to be solved in order to realize commercial use of the polymer electrolyte membrane fuel cell and, in particular, it is necessary to realize high performance, a long lifespan, and a reduction in the price of the polymer electrolyte membrane fuel cell. The element that exerts the greatest influence thereon is the membrane-electrode assembly and, in particular, the polymer electrolyte membrane is one of the core factors that exert the greatest influence on the performance and price of the MEA.

The requirements of the polymer electrolyte membrane necessary to operate the polymer electrolyte membrane fuel cell include high proton conductivity, high mechanical and chemical stability, high heat resistance, low fuel permeability, high mechanical strength, low moisture content, and excellent dimensional stability. A conventional polymer electrolyte membrane tends not to normally realize high performance under specific temperature and relative-humidity environments, particularly under high-temperature/low-humidity conditions. As a result, a polymer electrolyte membrane fuel cell having the conventional polymer electrolyte membrane applied thereto is limited in the range within which the fuel cell is capable of being employed.

In order to simultaneously secure the performance, durability, mechanical properties, and chemical properties of the polymer electrolyte membrane, a reinforced composite-membrane-type polymer electrolyte membrane having a reinforcement material applied thereto has been developed. However, a polymer electrolyte membrane having high proton conductivity has a shortcoming in that moisture content is high, whereby dimensional stability is reduced. A commercialized fluorine-based electrolyte membrane has higher performance than a hydrocarbon-based electrolyte membrane but has shortcomings in that open circuit voltage (OCV) is reduced and durability of the membrane is reduced

due to high hydrogen conductivity thereof.

In order to commercialize a polymer electrolyte membrane, therefore, it is necessary to improve dimensional stability of the polymer electrolyte membrane at the time of impregnation and drying while improving performance thereof and thus to improve mechanical durability thereof. To this end, it is necessary to secure the optimum structure of a reinforced composite membrane and to improve impregnation thereof.

US 2007/087245 and US 2003/059657 refer to polymer electrolyte membranes including two supports.

KR 2014 0085885 refers to a polymer electrolyte membrane including one support.

[Disclosure]

[Technical Problem]

It is an object of the present disclosure to provide a polymer electrolyte membrane configured such that impregnation of the polymer electrolyte membrane is improved, whereby performance of the polymer electrolyte membrane is improved, hydrogen crossover and dimensional change of the polymer electrolyte membrane are minimized, whereby mechanical and chemical durabilities of the polymer electrolyte membrane are improved, and the interface between an ion conductor and a support is stably maintained for a long time.

It is another object of the present disclosure to provide a method of manufacturing the polymer electrolyte membrane.

It is a further object of the present disclosure to provide a membrane-electrode assembly including the polymer electrolyte membrane.

[Technical Solution]

The technical solution is described in the appended set of claims.

[Advantageous effects]

Impregnation of a polymer electrolyte membrane according to the present disclosure is improved, whereby performance of the polymer electrolyte membrane is improved, hydrogen crossover and dimensional change of the polymer electrolyte membrane are minimized, whereby mechanical and chemical durabilities of the polymer electrolyte membrane are improved, and the interface between an ion conductor and a support is stably maintained for a long time.

[Description of Drawings]

FIG. 1 is an exploded perspective view illustrating the case in which porous supports according to the present disclosure are stacked in an intersection direction.

FIG. 2 is a coupled perspective view of FIG. 1.

FIG. 3 is a sectional view schematically showing an example of a polymer electrolyte membrane according to an embodiment of the present disclosure.

FIGS. 4 and 5 are scanning electron microscopy (SEM) photographs of polymer electrolyte membranes manufactured according to Example 1 of the present disclosure and Comparative Example 1, respectively.

[Mode for Invention]

Hereinafter, embodiments of the present disclosure will be described in detail with reference to the accompanying drawings such that the embodiments of the present disclosure can be easily implemented by a person having ordinary skill in the art to which the present disclosure pertains. However, the present disclosure may be realized in various different forms, and is not limited to the embodiments described herein.

A polymer electrolyte membrane according to the present disclosure includes a first porous support having first pores filled with a first ion conductor and a second porous support having at least one second pore filled with the first ion conductor and third pores filled with a second ion conductor, wherein the first and second porous supports are in contact with each other. The polymer electrolyte membrane is produced by the method of claim 1.

Optionally, the polymer electrolyte membrane according to the present disclosure may further include one or more porous supports stacked on any one of the first and second porous supports. That is, the polymer electrolyte membrane according to the present disclosure includes a stacked type porous support having a structure in which two or

more porous supports are stacked.

According to the present disclosure, individual porous supports constituting the stacked type porous support are in tight contact with each other. Unless the individual porous supports are different in kind from each other so as to be distinguished from each other, the interface therebetween may not be visually recognized, and the stacked type porous support may not be an apparent single porous support. When viewing from the viewpoint of a final product, rather than the viewpoint of a manufacturing process, therefore, the stacked type porous support according to the present disclosure may be considered to be a single porous support depending on circumstances.

However, features related to the use of the stacked type porous support and a manufacturing method according to the present disclosure related therewith provide various advantages in terms of various physical properties of a polymer electrolyte membrane compared to the case in which a single porous support having the same thickness as the stacked type porous support is used, a detailed description of which will follow.

In the embodiment of the present disclosure, all pores of the first porous support may be filled with the first ion conductor. Alternatively, the first porous support may further have at least one fourth pore filled with the second ion conductor.

Each of the first and second porous supports may be an isotropic porous support configured such that machine-direction (MD) tensile elongation (hereinafter referred to as "MD tensile elongation") and transverse-direction (TD) tensile elongation (hereinafter referred to as "TD tensile elongation") are equal to each other or the higher of the MD tensile elongation and the TD tensile elongation is 1.5 times or less the lower thereof.

The first and second porous supports may be stacked such that the directions in which the first and second porous supports have been drawn are perpendicular to each other.

The thickness of the stacked type porous support may be 50% or more, specifically 50% to 90%, of the overall thickness of the polymer electrolyte membrane. In the case in which the thickness of the stacked type porous support is less than 50% of the overall thickness of the polymer electrolyte membrane, the effect of improvement in dimensional stability and mechanical durability of a reinforced composite membrane having the stacked type porous support as a reinforcement material may be insignificant. In the case in which the thickness of the stacked type porous support is greater than 90% of the overall thickness of the polymer electrolyte membrane, the thickness of an ion conductive layer located on the upper or lower surface of the stacked type porous support may be too small, whereby sheet resistance may increase.

The stacked type porous support is constituted by stacking a plurality of porous supports, and the surface area of the stacked type porous support that directly contacts an ion conductor during an impregnation process is increased, compared to the case in which a single porous support having the same thickness as the stacked type porous support is used, whereby wetting of the stacked type porous support due to a solution including the ion conductor may be improved. In addition, when pores of the porous supports are filled with the ion conductor, air in the pores may be more easily discharged therefrom, whereby generation of microscopic air bubbles may be minimized, and therefore impregnation may be improved. Such improvement in wetting and impregnation increases ion conductivity of the polymer electrolyte membrane according to the present disclosure. In addition, an area capable of buffering dimensional change may be increased, whereby dimensional stability may be improved.

In order to improve dimensional stability of a reinforced composite electrolyte membrane manufactured using only a single porous support, it is necessary to increase the thickness of the porous support. As the thickness of the porous support is increased, however, wetting and impregnation of the porous support are lowered, whereby ion conductivity of the electrolyte membrane is reduced. In the case in which the thickness of the porous support is reduced, on the other hand, ion conductivity of the electrolyte membrane may be increased due to improvement in wetting and impregnation; however, the function as a support is not properly performed, and therefore dimensional stability of the electrolyte membrane is reduced. That is, in a reinforced composite electrolyte membrane manufactured using only a single porous support, ion conductivity and dimensional stability are physical properties having a trade-off therebetween.

In the present disclosure, the stacked type porous support is adopted, and at the same time an impregnation process and a add-on process peculiar to the present disclosure are performed, whereby it is possible to improve both ion conductivity and dimensional stability of the polymer electrolyte membrane.

Specifically, a polymer electrolyte membrane manufactured using a manufacturing method according to the present disclosure includes a porous support and an ion conductor with which pores of the porous support are filled, wherein (i) at a temperature of 80°C and a relative humidity (RH) of 50%, the polymer electrolyte membrane has an in-plane (IP) proton conductivity (hereinafter referred to as "IP proton conductivity") of 0.046 S/cm to 0.1 S/cm and a through-plane (TP) proton conductivity (hereinafter referred to as "TP proton conductivity") of 0.042 S/cm to 0.1 S/cm and (ii) each of the machine-direction (MD) swelling ratio (hereinafter referred to as "MD swelling ratio") and the transverse-direction (TD) swelling ratio (hereinafter referred to as "TD swelling ratio") of the polymer electrolyte membrane calculated by Equation 1 and Equation 2 below after the polymer electrolyte membrane is immersed in distilled water of room-temperature for 12 hours and then dried in a vacuum state at 50°C for 24 hours is 2% or less.

[Equation 1]

$$\Delta L(MD) = [(L_{wet}(MD) - L_{dry}(MD)) / L_{dry}(MD)] \times 100$$

[Equation 2]

$$\Delta L(TD) = [(L_{wet}(TD) - L_{dry}(TD)) / L_{dry}(TD)] \times 100$$

where $\Delta L(MD)$ is an MD swelling ratio, $\Delta L(TD)$ is a TD swelling ratio, $L_{wet}$ (MD) and $L_{wet}$ (TD) are an MD length and a TD length measured immediately before the drying, respectively, and $L_{dry}$(MD) and $L_{dry}$(TD) are an MD length and a TD length measured immediately after the drying, respectively.

The machine direction (MD), which is a length direction, means a direction in which a roll advances when the polymer electrolyte membrane is continuously produced in a roll-to-roll fashion or a direction in which the manufactured polymer electrolyte membrane is wound, and the transverse direction (TD), which is a width direction, means a direction perpendicular to the machine direction.

In addition, as a method similar to the method of measuring the MD swelling ratio and the TD swelling ratio, the thickness $T_{wet}$ of the polymer electrolyte membrane of a wet state and the thickness $T_{dry}$ of the polymer electrolyte membrane of a dry state may be measured and substituted into Equation 3 below to calculate a thickness swelling ratio.

$$(T_{wet} - T_{dry} / T_{dry}) \times 100 = \triangle T \text{ (thickness swelling ratio, \%)} \quad \text{[Equation 3]}$$

The TD swelling ratio and the MD swelling ratio of the polymer electrolyte membrane may be equal to each other, or the higher of the TD swelling ratio and the MD swelling ratio may be 1.5 times or less the lower thereof. In the case in which the higher of the TD swelling ratio and the MD swelling ratio is greater than 1.5 times the lower thereof, resistances to swelling are different from each other in both directions, whereby mechanical durability of the polymer electrolyte membrane is abruptly reduced as moisturization and drying are repeatedly performed.

Also, in the case in which impregnation of the stacked type porous support is improved, a water channel along which protons are movable may be successfully formed in a through-plane direction of the stacked type porous support, whereby performance of the stacked type porous support may be improved. In addition, a flow channel along which hydrogen gas is movable may be complicated, whereby resistance may increase when the hydrogen gas moves and thus hydrogen crossover may be reduced. In the case in which the stacked type porous support is used, therefore, it is possible to secure chemical durability while securing high performance.

Consequently, the polymer electrolyte membrane according to the embodiment of the present disclosure may have an IP proton conductivity of 0.046 S/cm to 0.1 S/cm and a TP proton conductivity of 0.042 S/cm to 0.1 S/cm at a temperature of 80°C and a relative humidity (RH) of 50%, and at the same time may have a hydrogen crossover of $7\times10^{-5}$ $cm^2$/sec or less at a temperature of 65°C and a relative humidity (RH) of 50%. In the case in which the IP and TP proton conductivities of the polymer electrolyte membrane are less than the above-specified ranges, it is not possible to secure basic functions as the polymer electrolyte membrane. In the case in which the hydrogen crossover of the polymer electrolyte membrane is greater than $7\times10^{-5}$ $cm^2$/sec, OCV may be lowered and long-term chemical durability may be greatly lowered. As long as the polymer electrolyte membrane satisfies a predetermined level or more of proton conductivity, it is preferable that hydrogen crossover be lower. When considering the current technical limitations, however, the lower limit of hydrogen crossover of the polymer electrolyte membrane may be $1\times10^{-8}$ $cm^2$/sec.

In addition, the TP proton conductivity and the IP proton conductivity of the polymer electrolyte membrane may be equal to each other, or the higher of the TP proton conductivity and the IP proton conductivity may be 1.5 times or less, specifically 1.0 to 1.1 times, the lower thereof. That is, the stacked porous supports of the polymer electrolyte membrane may be in tight contact with each other to the extent to which the interface between the supports cannot be visually recognized, whereby impregnation may be improved and thus a through-plane (TP) water channel along which protons are movable may be more successfully formed, compared to other methods. This may be indicated by the ratio between the IP proton conductivity and the TP proton conductivity.

The in-plane (IP) direction of the polymer electrolyte membrane, which is a plane direction perpendicular to the through-plane (TP) direction, may mean one or both of the machine direction (MD) and the transverse direction (TD), which is perpendicular to the machine direction.

The IP proton conductivity may be calculated by using membrane resistance at a relative humidity of 50% after measuring membrane resistance at a temperature of 80°C and a relative humidity of 30% to 95% using a magnetic suspension balance (Bell Japan Company). The TP proton conductivity may be measured by coating opposite surfaces of the polymer electrolyte membrane with Pt catalyst ink, placing and fastening a gas diffusion layer thereon, measuring

membrane resistance at a temperature of 80°C and a relative humidity of 50%, and dividing the measured membrane resistance by the thickness of the polymer electrolyte membrane. At this time, Equations 4 and 5 below may be used.

Membrane resistance (R) = ($R_1$ - $R_2$) × (effective area of membrane) [Equation 4]

where $R_1$ is resistance [Ω] when a membrane is poured, and $R_2$ is resistance [Ω] when no membrane is poured.

[Equation 5]

$$\text{Proton conductivity (S/cm)} = 1/R \times t$$

where R is membrane resistance [Ω·cm$^2$], and t is the thickness of a membrane [cm].

The ratio between the IP proton conductivity and the TP proton conductivity may be calculated by dividing the higher of the IP proton conductivity and the TP proton conductivity by the lower thereof. For example, when the IP proton conductivity is less than the TP proton conductivity, the TP proton conductivity may be divided by the IP proton conductivity to obtain the ratio. On the other hand, when the TP proton conductivity is less than the IP proton conductivity, the IP proton conductivity may be divided by the TP proton conductivity to obtain the ratio.

If the ratio between the IP proton conductivity and the TP proton conductivity is greater than 1.5, the performance of a membrane-electrode assembly may be reduced, and the amount of hydrogen gas crossover through a non-impregnation area may be increased.

Also, when manufacturing the stacked type porous support by stacking the porous supports, the porous supports are not bonded to each other using an adhesive, and the porous supports are not bonded to each other by thermal compression, either. If the stacked type porous support includes an adhesive layer or is formed by thermal compression, proton conductivity is lowered, whereby performance is reduced. when manufacturing the stacked type porous support, therefore, one of the porous supports is added on the other while each of the porous supports is wetted with a solution including an ion conductor, whereby the interface at which the ion conductors join each other is located in any one of the porous supports and thus bonding strength is improved. Consequently, it is possible to add one of the porous supports on the other at high adhesive strength without causing a problem of performance reduction which otherwise might occur due to an additional adhesive layer.

Consequently, the ratio between machine-direction (MD) tensile strength and transverse-direction (TD) tensile strength of the polymer electrolyte membrane may be 1.0 to 1.5, specifically 1.0 to 1.2. The ratio between the machine-direction (MD) tensile elongation and the transverse-direction (TD) tensile elongation of the polymer electrolyte membrane may be 1.0 to 1.5, specifically 1.0 to 1.2.

The tensile strength and the tensile elongation may be measured by stretching a polymer electrolyte membrane having an area of 3 cm$^2$ in the machine direction (MD) or the transverse direction (TD) at a crosshead speed of 500 mm/sec using a 1 kN load cell. The MD tensile strength and the MD tensile elongation are measured by stretching the polymer electrolyte membrane in the machine direction, and the TD tensile strength and the TD tensile elongation are measured by stretching the polymer electrolyte membrane in the transverse direction.

The ratio between the MD tensile strength and the TD tensile strength and the ratio between the MD tensile elongation and the TD tensile elongation may be calculated by dividing a larger one thereof by a smaller one.

If the ratio between the MD tensile strength and the TD tensile strength and the ratio between the MD tensile elongation and the TD tensile elongation of the polymer electrolyte membrane are greater than 1.5, mechanical durability of the polymer electrolyte membrane may not be sufficiently improved due to the anisotropy thereof.

As an illustration, the porous support may include a highly fluorinated polymer having high resistance to thermal and chemical decomposition, preferably a perfluorinated polymer. For example, the porous support may be a copolymer of polytetrafluoroethylene (PTFE) or tetrafluoroethylene and $CF_2=CFC_nF_{2n+1}$ (n being a real number ranging from 1 to 5) or $CF_2=CFO\text{-}(CF_2CF(CF_3)O)_mC_nF_{2n+1}$ (m being a real number ranging from 0 to 15 and n being a real number ranging from 1 to 15).

The PTFE is commercially available, and may be appropriately used as the porous support. In addition, expanded polytetrafluoroethylene (e-PTFE), which has a polymer fibril microstructure or a microstructure in which nodes are connected to each other via fibrils, may also be appropriately used as the porous support, and a film having a polymer fibril microstructure in which no nodes are present may also be appropriately used as the porous support.

The porous support including the perfluorinated polymer is formed by extruding dispersion-polymerized PTFE onto tape in the presence of a lubricant and drawing the same. Consequently, it is possible to manufacture a porous support having higher porosity and higher strength. In addition, the e-PTFE may be thermally treated at a temperature exceeding the melting point (about 342°C) of the PTFE, whereby it is possible to increase the amorphous content ratio of PTFE. An e-PTFE film manufactured using the above method may have micropores having various diameters and porosities. The e-PTFE film manufactured using the above method may have a porosity of at least 35%, and the diameter

of each of the micropores may be about 0.01 μm to 1 μm. In addition, the thickness of the porous support including the perfluorinated polymer may be variously changed. As an example, the thickness of the porous support may be 2 μm to 40 μm, preferably 5 μm to 20 μm. In the case in which the thickness of the porous support is less than 2 μm, the mechanical strength of the porous support may be remarkably reduced. In the case in which the thickness of the porous support is greater than 40 μm, on the other hand, the resistance loss of the porous support may be increased, the weight of the porous support may be increased, and integration of the porous support may be deteriorated.

As another illustration of the porous support, the porous support may be a nonwoven fibrous web including a plurality of fibers oriented at random.

The nonwoven fibrous web is a sheet that is interlaid but has a structure of individual fibers or filaments, rather than the same structure as woven cloth. The nonwoven fibrous web may be manufactured using a method selected from the group consisting of carding, garneting, air laying, wet laying, melt blowing, spun bonding, and stitch bonding.

The fiber may include one or more polymer materials. In general, any fiber-forming polymer material may be used. Specifically, a hydrocarbon-based fiber-forming polymer material may be used. For example, the fiber-forming polymer material may include, but is not limited to, polyolefin, such as polybutylene, polypropylene, or polyethylene; polyester, such as polyethylene terephthalate or polybutylene terephthalate; polyamide (nylon-6 or nylon-6,6); polyurethane; polybutene; polylactic acid; polyvinyl alcohol; polyphenylene sulfide; polysulfone; a liquid crystalline polymer; polyethylene-co-vinyl acetate; polyacrylonitrile; cyclic polyolefin; polyoxymethylene; a polyolefin-based thermoplastic elastomer; and a combination thereof.

As another illustration of the porous support having the form of the nonwoven fibrous web, the porous support may include a nanoweb in which nanofibers are integrated into the form of a nonwoven cloth including a plurality of pores.

A hydrocarbon-based polymer, which exhibits high chemical resistance and hydrophobicity, whereby the hydrocarbon-based polymer is prevented from being deformed by moisture in a high-humidity environment, is preferably used as the nanofibers. Specifically, the hydrocarbon-based polymer may be selected from the group consisting of nylon, polyimide, polyaramid, polyetherimide, polyacrylonitrile, polyaniline, polyethylene oxide, polyethylene naphthalate, polybutylene terephthalate, styrene-butadiene rubber, polystyrene, polyvinyl chloride, polyvinyl alcohol, polyvinylidene fluoride, polyvinyl butylene, polyurethane, polybenzoxazole, polybenzimidazole, polyamide imide, polyethylene terephthalate, polyphenylene sulfide, polyethylene, polypropylene, a copolymer thereof, and a mixture thereof. Thereamong, polyimide, which exhibits higher thermal resistance, chemical resistance, and shape stability, is preferably used.

The nanoweb is an aggregate of nanofibers in which nanofibers manufactured by electrospinning are randomly arranged. At this time, it is preferable for the nanofibers to have an average diameter of 40 nm to 5000 nm in consideration of the porosity and thickness of the nanoweb when the diameters of 50 fibers are measured using a scanning electron microscope (JSM6700F, JEOL) and the average of the diameters of the fibers is calculated. In the case in which the average diameter of the nanofibers is less than 40 nm, the mechanical strength of the porous support may be reduced. In the case in which the average diameter of the nanofibers is greater than 5000 nm, on the other hand, the porosity of the porous support may be remarkably deteriorated, and the thickness of the porous support may be increased.

The thickness of the nonwoven fibrous web may be 3 μm to 50 μm, specifically 3 μm to 20 μm. In the case in which the thickness of the nonwoven fibrous web is less than 3 μm, the mechanical strength of the nonwoven fibrous web may be reduced. In the case in which the thickness of the nonwoven fibrous web is greater than 50 μm, on the other hand, the resistance loss of the nonwoven fibrous web may be increased, the weight of the nonwoven fibrous web may be increased, and integration of the nonwoven fibrous web may be deteriorated.

The basic weight of the nonwoven fibrous web may range from 3 $g/m^2$ to 20 $g/m^2$. In the case in which the basic weight of the nonwoven fibrous web is less than 3 $g/m^2$, visible pores are formed in the nonwoven fibrous web, whereby it may be difficult to realize the function as the porous support. In the case in which the basic weight of the nonwoven fibrous web is greater than 20 $g/m^2$, the nonwoven fibrous web may be manufactured in the form of paper or textile, which has few pores formed therein.

The porosity of the porous support may be 45% or more, specifically 60% or more. Meanwhile, it is preferable for the porous support to have a porosity of 90% or less. In the case in which the porosity of the porous support is greater than 90%, the shape stability of the porous support may be deteriorated, whereby subsequent processes may not be smoothly carried out. The porosity of the porous support may be calculated using Equation 6 below based on the ratio of the volume of air to the overall volume of the porous support. At this time, the overall volume of the porous support may be calculated by manufacturing a rectangular sample and measuring the length, width, and thickness of the sample, and the volume of the air may be obtained by subtracting the volume of a polymer, back-calculated from the density thereof after measuring the mass of the sample, from the overall volume of the porous support.

$$\text{Porosity (\%)} = (\text{volume of air in porous support}/\text{overall volume of porous support}) \times 100 \qquad \text{[Equation 6]}$$

The polymer electrolyte membrane is a reinforced composite-membrane-type polymer electrolyte membrane in

which the pores in the porous support are filled with an ion conductor.

The porous supports constituting the stacked type porous support may be of the same kind, or may be of different kinds.

At this time, each of the porous supports may be an isotropic porous support having a ratio between the MD tensile elongation and the TD tensile elongation of 1.0 to 1.5, specifically 1.0 to 1.2.

In the case in which the isotropic porous supports are stacked, it is possible to minimize deviation in the ratio between the machine-direction tensile elongation and the transverse-direction tensile elongation and the dimensional variation of the stacked type porous support, whereby it is possible to overcome the shortcomings of a porous support manufactured using a drawing method and to further improve impregnation and dimensional stability.

The tensile elongation is measured by stretching a porous support having a width of 1 cm and a length of 5 cm in the machine direction (MD) or the transverse direction (TD) at a crosshead speed of 500 mm/sec using a 1 kN load cell. The ratio between the MD tensile elongation and the TD tensile elongation is calculated by dividing a larger one thereof by a smaller one.

In addition, the porous supports may be stacked in the same direction, or may be stacked in an intersection direction. For example, each of the porous supports may be drawn in any one of the machine direction (MD) and the transverse direction (TD) so as to have directivity, and the porous supports may be stacked such that the directions in which the porous supports have been drawn perpendicularly intersect each other.

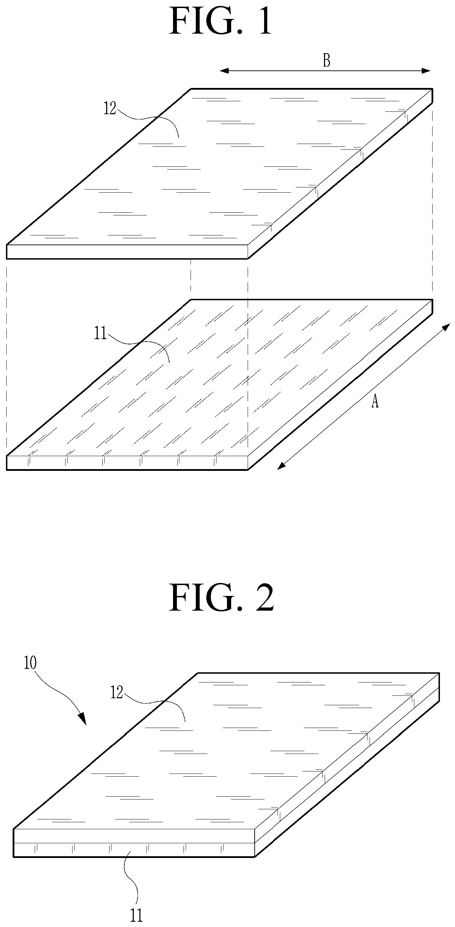

FIG. 1 is an exploded perspective view illustrating the case in which the porous supports are stacked in the intersection direction, and FIG. 2 is a coupled perspective view of FIG. 1. Referring to FIGS. 1 and 2, the first porous support 11 has been drawn in direction A, and the second porous support 12 has been drawn in direction B. At this time, the stacked type porous support 10 is configured such that the first porous support 11 and the second porous support 12 are stacked in such a way that direction A and direction B perpendicularly intersect each other.

In addition, the mechanical properties, such as the tensile strength and the tensile elongation, of each of the porous supports in any one of the machine direction and the transverse direction may be higher, and the porous supports may be stacked such that the directions in which the mechanical properties thereof are higher perpendicularly intersect each other.

In the case in which the porous supports are stacked in the intersection direction, as described above, it is possible to minimize deviation in the ratio between the machine-direction tensile elongation and the transverse-direction tensile elongation and the dimensional variation of the stacked type porous support, even though the above isotropic porous supports are not used, whereby it is possible to overcome the shortcomings of a porous support manufactured using a drawing method and to further improve impregnation and dimensional stability. More particularly, although the ratio between the MD tensile elongation and the TD tensile elongation of each of the porous supports stacked in the intersection direction may be greater than 1.5, the ratio between the MD tensile elongation and the TD tensile elongation of the stacked type porous support may be 1.0 to 1.5 as the result of the intersection stacking.

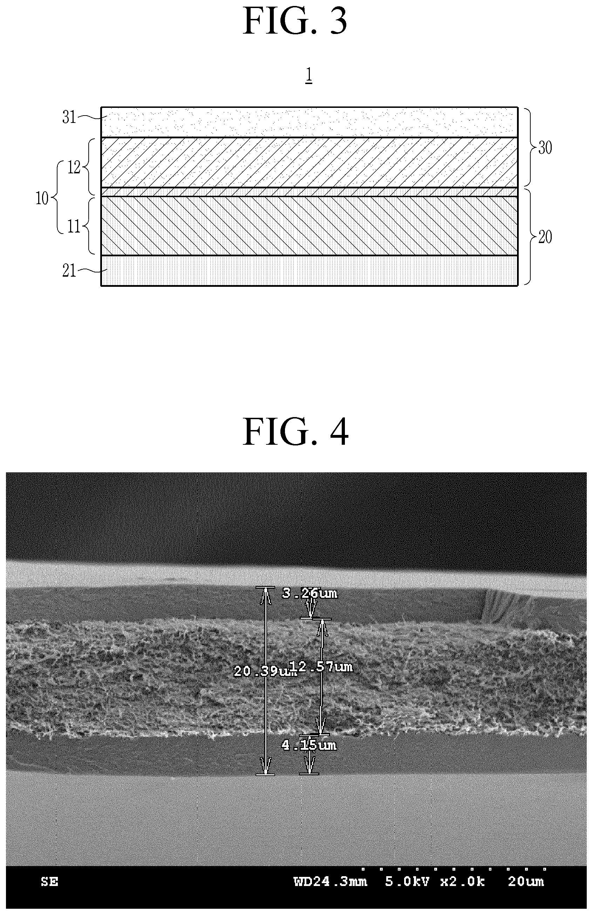

FIG. 3 is a sectional view schematically showing an example of the polymer electrolyte membrane. Referring to FIG. 3, the stacked type porous support 10 includes a first porous support 11 and a second porous support 12, wherein first pores of the first porous support 11 are filled with a first ion conductor 20, and third pores of the second porous support 12 are filled with a second ion conductor 30. In addition, a first ion conductor layer 21 is located on the outer surface of the first porous support 11, and a second ion conductor layer 13 is located on the outer surface of the second porous support 12.

The interface at which the first ion conductor 20 and the second ion conductor 30 join each other may be located in any one of the porous supports 11 and 12. In FIG. 3, the interface at which the first ion conductor 20 and the second ion conductor 30 join each other is shown as being located in the second porous support 12. That is, the second porous support 12 has at least one second pore filled with the first ion conductor 20.

The polymer electrolyte membrane according to the present disclosure has improved bonding strength between the porous supports since, when manufactured, one of the porous supports is added on the other porous support while the one of the porous supports has been wetted with a solution including an ion conductor, whereby the ion conductor can permeate into the other porous support.

In addition, according to the present disclosure, the polymer electrolyte membrane includes no ion conductor layer between the stacked porous supports.

That is, the polymer electrolyte membrane includes a stacked type porous support manufactured by adding one of the porous supports on the other porous support while the one of the porous supports has been wetted with a solution including an ion conductor. Consequently, the polymer electrolyte membrane according to the present disclosure is different from a stacked type polymer electrolyte membrane, which is manufactured by respectively wetting porous supports with a solution including an ion conductor, respectively drying them to manufacture a plurality of polymer electrolyte membranes, and then stacking them, in that no ion conductor layer is included between the stacked porous supports.

That is, in the stacked type polymer electrolyte membrane, a first ion conductor layer formed on the surface of a first porous support and a second ion conductor layer formed on the surface of a second porous support are contacted and

laminated with each other at the time of stacking the polymer electrolyte membranes, whereby a thick ion conductor layer is formed between the porous supports. In the case of the polymer electrolyte membrane according to the present disclosure, on the other hand, the porous supports are in direct contact with each other.

Consequently, impregnation of the polymer electrolyte membrane according to the present disclosure may be improved, whereby a water channel along which protons are movable may be successfully formed in the through-plane direction of the stacked type porous support, and therefore performance of the polymer electrolyte membrane may be improved. In addition, a flow channel along which hydrogen gas is movable may be complicated, whereby resistance may increase when the hydrogen gas moves and thus hydrogen crossover may be reduced. In the case of the stacked type polymer electrolyte membrane, however, a flow channel along which hydrogen gas is movable is not complicated, whereby it is not possible to obtain the effect of reducing hydrogen crossover due to an increase in resistance when the hydrogen gas moves.

Each of the first and second ion conductors may independently be a cation conductor having a cation exchange group that is capable of transferring cations, such as protons, or an anion conductor having an anion exchange group that is capable of transferring anions, such as hydroxyl ions, carbonate, or bicarbonate.

The cation exchange group may be any one selected from the group consisting of a sulfonic acid group, a carboxyl group, a boronic acid group, a phosphate group, an imide group, a sulfonimide group, a sulfonamide group, a sulfonic acid fluoride group, and a combination thereof. In general, the cation exchange group may be a sulfonic acid group or a carboxyl group.

The cation conductor may be a fluorine-based polymer having the cation exchange group and including fluorine in the main chain thereof; a hydrocarbon-based polymer, such as benzimidazole, polyamide, polyamide imide, polyimide, polyacetal, polyethylene, polypropylene, acrylic resin, polyester, polysulfone, polyether, polyether imide, polyester, polyether sulfone, polyether imide, polycarbonate, polystyrene, polyphenylene sulfide, polyether ether ketone, polyether ketone, polyaryl ether sulfone, polyphosphazene, or polyphenyl quinoxaline; a partially fluorinated polymer, such as a polystyrene-graft-ethylene tetrafluoroethylene copolymer or a polystyrene-graft-polytetrafluoroethylene copolymer; or sulfonyl imide.

More specifically, in the case in which the cation conductor is a proton conductor, each of the polymers may include a cation exchange group selected from the group consisting of a sulfonic acid group, a carboxylic acid group, a phosphate group, a phosphonic acid group, and a derivative thereof in the side chain thereof. As a concrete example, the cation conductor may be, but is not limited to, a fluorine-based polymer including poly(perfluorosulfonic acid), poly(perfluorocarboxylic acid), a copolymer of tetrafluoroethylene and fluoro vinyl ether including a sulfonic acid group, defluorinated polyetherketone sulfide, and a mixture thereof; or a hydrocarbon-based polymer including sulfonated polyimide (S-PI), sulfonated polyarylether sulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture of thereof.

The anion conductor is a polymer capable of transporting anions, such as hydroxyl ions, carbonate, or bicarbonate. The anion conductor is commercially available in the form of hydroxide or halide (generally chloride), and the anion conductor may be used in an industrial water purification, metal separation, or catalyst process.

A polymer doped with metal hydroxide may generally be used as the anion conductor. Specifically, poly(ether sulfone), polystyrene, a vinyl-based polymer, poly(vinyl chloride), poly(vinylidene fluoride), poly(tetrafluoroethylene), poly(benzimidazole), or poly(ethylene glycol), doped with metal hydroxide, may be used as the anion conductor.

Meanwhile, any one selected from the group consisting of the stacked type porous support, the first ion conductor layer, and the second ion conductor layer may further include an antioxidant.

Since a reduction reaction of oxygen at a cathode of a polymer electrolyte membrane fuel cell is performed via hydrogen peroxide ($H_2O_2$), hydrogen peroxide may be generated at the cathode, or a hydroxyl radical ($OH^-$) may be generated from the generated hydrogen peroxide. In addition, as oxygen molecules are transmitted through the polymer electrolyte membrane at an anode of the polymer electrolyte membrane fuel cell, the hydrogen peroxide or hydroxyl radical may also be generated at the anode. The generated hydrogen peroxide or hydroxyl radical deteriorates a polymer including a sulfonic acid group included in the polymer electrolyte membrane or the catalyst electrode.

Consequently, an antioxidant capable of decomposing the peroxide or radical may be included in order to inhibit the generation of radicals from the peroxide or to decompose the generated radicals, whereby it is possible to prevent the deterioration of the polymer electrolyte membrane or the catalyst electrode and thus to improve the chemical durability of the polymer electrolyte membrane.

The kind of the antioxidant capable of decomposing the peroxide or radical is not particularly restricted and any kind of antioxidant is usable in the present disclosure, as long as it is possible to rapidly decompose a peroxide (particularly,

hydrogen peroxide) or a radical (particularly, a hydroxyl radical) generated during the operation of the polymer electrolyte membrane fuel cell. Specifically, for example, the antioxidant capable of decomposing the peroxide or radical may be configured in the form of a transition metal capable of decomposing the peroxide or radical, a noble metal capable of decomposing the peroxide or radical, an ion thereof, a salt thereof, or an oxide thereof.

Specifically, the transition metal capable of decomposing the peroxide or radical may be any one selected from the group consisting of cerium (Ce), nickel (Ni), tungsten (W), cobalt (Co), chromium (Cr), zirconium (Zr), yttrium (Y), manganese (Mn), iron (Fe), titanium (Ti), vanadium (V), molybdenum (Mo), lanthanum (La), and neodymium (Nd) .

In addition, the noble metal capable of decomposing the peroxide or radical may be any one selected from the group consisting of silver (Au), platinum (Pt), ruthenium (Ru), palladium (Pd), and rhodium (Rh).

In addition, the ion of the transition metal or the noble metal capable of decomposing the peroxide or radical may be any one selected from the group consisting of a cerium ion, a nickel ion, a tungsten ion, a cobalt ion, a chromium ion, a zirconium ion, an yttrium ion, a manganese ion, an iron ion, a titanium ion, a vanadium ion, a molybdenum ion, a lanthanum ion, a neodymium ion, a silver ion, a platinum ion, a ruthenium ion, a palladium ion, and a rhodium ion. Specifically, in the case of cerium, a trivalent cerium ion ($Ce^{3+}$) or a tetravalent cerium ion ($Ce^{4+}$) may be used.

In addition, the oxide of the transition metal or the noble metal capable of decomposing the peroxide or radical may be any one selected from the group consisting of cerium oxide, nickel oxide, tungsten oxide, cobalt oxide, chromium oxide, zirconium oxide, yttrium oxide, manganese oxide, iron oxide, titanium oxide, vanadium oxide, molybdenum oxide, lanthanum oxide, and neodymium oxide.

In addition, the salt of the transition metal or the noble metal capable of decomposing the peroxide or radical may be any one selected from the group consisting of carbonate, acetate, chloride salt, fluoride salt, sulfate, phosphate, tungstate, hydrate, ammonium acetate, ammonium sulfate, and acetylacetonate of the transition metal or the noble metal. Specifically, in the case of cerium, cerium carbonate, cerium acetate, cerium chloride, cerium nitrate, cerium sulfate, ammonium cerium (II) nitrate, or ammonium cerium (IV) sulfate may be used, and cerium acetylacetonate may be used as organic metal complex salt.

Meanwhile, in order to prevent elution of the antioxidant during operation of the fuel cell, an organic-based second antioxidant capable of fixing the antioxidant may be included.

The organic-based second antioxidant may be a compound including a resonance structure based on a double bond of carboxyl acid, a hydroxyl group, and carbon. The organic-based second antioxidant having this structure has a larger molecular size than an ion cluster and a channel in the polymer electrolyte membrane, whereby elution may be prevented due to the size of molecules that cannot use an elution path and through a hydrogen bond between a large amount of carboxyl acid and a hydroxyl group included in the organic-based second antioxidant and the polymer in the polymer electrolyte membrane.

A concrete example of the organic-based second antioxidant may be any one selected from the group consisting of syringic acid, vanillic acid, protocatechuic acid, coumaric acid, caffeic acid, ferulic acid, chlorogenic acid, cynarine, gallic acid, and a mixture thereof.

In the case in which the antioxidant includes both a first antioxidant and a second antioxidant, the second antioxidant may be included so as to account for 0 to 200 parts by weight, specifically 30 to 100 parts by weight, based on 100 parts by weight of the first antioxidant. In the case in which the content of the second antioxidant is less than 30 parts by weight, oxidation prevention similar to the case in which only the first antioxidant is used may be achieved, whereby it is difficult to obtain the effect of introducing the second antioxidant. In the case in which the content of the second antioxidant is greater than 200 parts by weight, dispersibility of the polymer in the polymer electrolyte membrane may be deteriorated, whereby uniformity of the entire polymer electrolyte membrane may be reduced.

A method of manufacturing a polymer electrolyte membrane according to another embodiment of the present disclosure includes a step of casting a first mixed liquid including a first ion conductor, a step of placing a first porous support of a dry state on the first mixed liquid such that the first porous support is entirely brought into a wet state, a step of adding a second porous support of a dry state on the first porous support immediately after the first porous support is entirely brought into the wet state such that the first and second porous supports are in contact with each other, a step of applying a second mixed liquid including a second ion conductor to the second porous support such that the second porous support is entirely brought into a wet state, and a step of drying the first and second porous supports of the wet state.

The step of applying the second mixed liquid including the second ion conductor to the second porous support such that the second porous support is entirely brought into the wet state may be performed by (i) if the first ion conductor and the second ion conductor are the same, adding the second porous support on the first porous support and then immersing or impregnating both the first and second porous supports in or with the second mixed liquid, or (ii) coating the exposed surface of the second porous support with the second mixed liquid. Coating with the second mixed liquid may be performed by bar coating, comma coating, slot die coating, screen printing, spray coating, doctor blade coating, or laminating.

The first/second mixed liquid may be a solution or a dispersion liquid containing the first/second ion conductor. Meanwhile, the antioxidant may be further added to the first and/or second mixed liquid. A description of the antioxidant is

identical to the above description, and therefore a repetitive description thereof will be omitted.

A solvent or a dispersion medium for manufacturing the first and second mixed liquids may be water, a hydrophilic solvent, an organic solvent, or a mixture of two or more thereof

The hydrophilic solvent may have at least one functional group selected from the group consisting of alcohol, isopropyl alcohol, ketone, aldehyde, carbonate, carboxylate, carboxylic acid, ether, and amide, each of which includes straight-chain or branched-chain saturated or unsaturated hydrocarbon having a carbon number ranging from 1 to 12 as the main chain thereof. Each thereof may include an alicyclic or aromatic cyclic compound as at least a portion of the main chain thereof.

The organic solvent may be selected from among N-methylpyrrolidone, dimethyl sulfoxide, tetrahydrofuran, and a mixture thereof.

Meanwhile, a step of filling pores in the stacked type porous support with the first ion conductor or the second ion conductor may be affected by various factors, such as temperature and time. For example, the filling step may be affected by the thickness of the stacked type porous support, the concentration of the mixed liquid including the first or second ion conductor, and the kind of the solvent/dispersion medium. However, the process may be performed at a temperature equal to or higher than the freezing point of the solvent/dispersion medium and equal to or less than 100°C. More generally, the process may be performed at a temperature ranging from room temperature (20°C) to 70°C for about 5 to 30 minutes. Here, the above temperature must be lower than the melting point of each of the porous supports.

Finally, in the step of drying the first porous support and the second porous support on which the first porous support is added, primary drying may be performed at 60°C to 150°C for 15 minutes to 1 hour, and secondary drying may be performed at 150°C to 190°C for 3 minutes to 1 hour. Specifically, the primary drying may be performed at 60°C to 120°C for 15 minutes to 1 hour, and the secondary drying may be performed at 170°C to 190°C for 3 minutes to 1 hour. If the primary drying is performed at a temperature lower than 60°C for less than 15 minutes, the solvent may not be primarily discharged, whereby the porous supports may not have the form of a highly dense film. If the secondary drying is performed at a temperature higher than 190°C for more than 1 hour, the sulfonic acid group may be decomposed, whereby the performance of the membrane may be deteriorated.

According to another embodiment of the present disclosure, there are provided a membrane-electrode assembly and a fuel cell including the polymer electrolyte membrane.

Specifically, the membrane-electrode assembly includes an anode and a cathode, located opposite each other, and the polymer electrolyte membrane, located between the anode and the cathode. The membrane-electrode assembly is identical to a general membrane-electrode assembly for fuel cells except that the polymer electrolyte membrane according to the present disclosure is used as the polymer electrolyte membrane, and therefore a detailed description thereof will be omitted from this specification.

In addition, the fuel cell is identical to a general fuel cell except that the membrane-electrode assembly is included, and therefore a detailed description thereof will be omitted from this specification.

Hereinafter, examples of the present disclosure will be described in detail with reference to the accompanying drawings such that the examples of the present disclosure can be easily implemented by a person having ordinary skill in the art to which the present disclosure pertains. However, the present disclosure may be realized in various different forms, and is not limited to the examples described herein.

[Manufacturing Example 1: Manufacture of polymer electrolyte membrane]

(Example 1)

A first porous support (e-PTFE, pore size: 0.10 μm to 0.15 μm, thickness: 6 μm, and ratio between MD tensile elongation and TD tensile elongation: 1.1) was wetted in a first ion conductor dispersion liquid including 20 wt% of a highly fluorinated polymer having an equivalent weight (EW) of 800 g/eq.

A second porous support (e-PTFE, pore size: 0.10 μm to 0.15 μm, thickness: 6 μm, and ratio between MD tensile elongation and TD tensile elongation: 1.1) was added on the first porous support while the first porous support was wetted.

A second ion conductor dispersion liquid including 20 wt% of a highly fluorinated polymer having an equivalent weight (EW) of 800 g/eq was additionally applied onto the second porous support while the second porous support is placed on the first porous support.

Subsequently, the first porous support and the second porous support were dried at 60°C for 1 hour and were then dried at 150°C for 30 minutes to manufacture a polymer electrolyte membrane.

(Example 2)

A first porous support (e-PTFE, pore size: 0.10 μm to 0.15 μm, thickness: 6 μm, and ratio between MD tensile elongation and TD tensile elongation: 1.2) was wetted in a first ion conductor dispersion liquid including 20 wt% of a highly

fluorinated polymer having an equivalent weight (EW) of 800 g/eq.

A second porous support (e-PTFE, pore size: 0.10 μm to 0.15 μm, thickness: 6 μm, and ratio between MD tensile elongation and TD tensile elongation: 1.2) was added on the first porous support while the first porous support was wetted. At this time, the first e-PTFE support and the second e-PTFE support were stacked such that the direction in which the first e-PTFE support had been drawn and the direction in which the second e-PTFE support had been drawn perpendicularly intersected each other.

A second ion conductor dispersion liquid including 20 wt% of a highly fluorinated polymer having an equivalent weight (EW) of 800 g/eq was additionally applied onto the second porous support while the second porous support is placed on the first porous support.

Subsequently, the first porous support and the second porous support were dried at 60°C for 1 hour and were then dried at 150°C for 30 minutes to manufacture a polymer electrolyte membrane.

(Comparative Example 1)

Two porous supports (e-PTFE, pore size: 0.10 μm to 0.15 μm, thickness: 6 μm, and ratio between MD tensile elongation and TD tensile elongation: 1.1) were impregnated with an ion conductor dispersion liquid including 20 wt% of a highly fluorinated polymer having an equivalent weight (EW) of 800 g/eq. Subsequently, the two porous supports were dried at 60°C for 1 hour and were then dried at 120°C for 30 minutes to manufacture two polymer electrolyte membranes.

The two manufactured polymer electrolyte membranes were thermally pressed under conditions of 160°C and 1.2 tons to manufacture a stacked polymer electrolyte membrane.

(Comparative Example 2)

A polytetrafluoroethylene adhesive was applied between two porous supports (e-PTFE, pore size: 0.10 μm to 0.15 μm, thickness: 6 μm, and ratio between MD tensile elongation and TD tensile elongation: 1.1), and then the two porous supports were heated and pressed at a temperature of 340°C and a pressure of 0.27 MPA for 30 seconds such that the two porous supports were bonded to each other to manufacture a bonded type porous support.

The manufactured bonded type porous support was impregnated with an ion conductor dispersion liquid including 20 wt% of a highly fluorinated polymer having an equivalent weight (EW) of 800 g/eq. Subsequently, the bonded type porous support was dried at 60°C for 1 hour and was then dried at 150°C for 30 minutes to manufacture a polymer electrolyte membrane.

(Comparative Example 3)

A porous support (e-PTFE, pore size: 0.10 μm to 0.15 μm, thickness: 15 μm, and ratio between MD tensile elongation and TD tensile elongation: 1.5) was impregnated with an ion conductor dispersion liquid including 20 wt% of a highly fluorinated polymer having an equivalent weight (EW) of 800 g/eq. Subsequently, the porous support was dried at 60°C for 1 hour and was then dried at 150°C for 30 minutes to manufacture a polymer electrolyte membrane.

[Experimental Example 1: Measurement of characteristics of manufactured polymer electrolyte membranes]

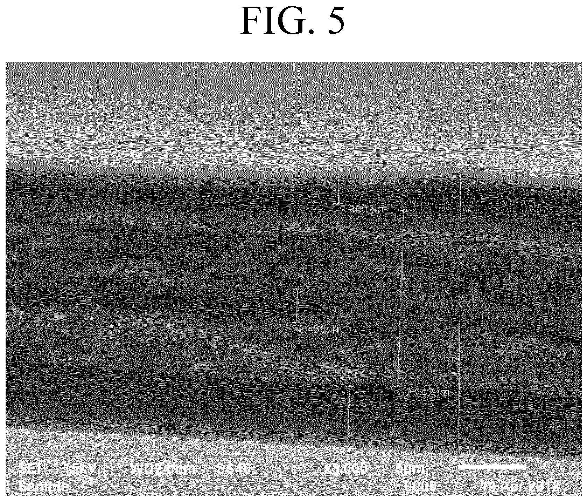

Scanning electron microscopy photographs of the polymer electrolyte membranes manufactured according to Example 1 and Comparative Example 1 are shown in FIGS. 4 and 5, respectively.

Referring to FIG. 4, it can be seen that the polymer electrolyte membrane manufactured according to Example 1 was well bonded to the extent to which not only the interface between the first and second ion conductors but also the interface between the first and second porous supports was not visible.

In addition, it can be seen that the first and second porous supports were in contact with each other and any layer consisting of an ion conductor alone was not present therebetween.

Referring to FIG. 5, on the other hand, in the case of the polymer electrolyte membrane manufactured according to Comparative Example 1, a layer consisting of an ion conductor alone was present between the first porous support and the second porous support, and the thickness of the layer was 2 μm.

[Experimental Example 2: Measurement of physical properties of manufactured polymer electrolyte membranes]

The IP proton conductivity, TP proton conductivity, swelling ratio, tensile strength, and tensile elongation of each of the polymer electrolyte membranes manufactured according to the examples and the comparative examples were measured, and the results are shown in Table 1 below.

The IP proton conductivity was calculated by using membrane resistance at a relative humidity of 50% after

measuring membrane resistance at a temperature of 80°C and a relative humidity of 30% to 95% using a magnetic suspension balance (Bell Japan Company). At this time, the effective area of the membrane was 0.75 $cm^2$.

The TP proton conductivity was measured by coating opposite surfaces of the manufactured polymer electrolyte membrane with Pt catalyst ink, placing and fastening a gas diffusion layer (GDL) thereon, measuring membrane resistance at a temperature of 80°C and a relative humidity (RH) of 50%, and dividing the measured membrane resistance by the thickness of the polymer electrolyte membrane.

As to the swelling ratio, a thickness swelling ratio and a length swelling ratio were calculated by immersing the manufactured polymer electrolyte membrane in distilled water of room-temperature for 12 hours, taking the polymer electrolyte membrane of a wet state out of the distilled water, measuring the thickness, the machine-direction (MD) length, and the transverse-direction (TD) length of the wet polymer electrolyte membrane, drying the polymer electrolyte membrane in a vacuum state at 50°C for 24 hours, measuring the thickness, the machine-direction (MD) length, and the transverse-direction (TD) length of the dried polymer electrolyte membrane, and putting the thickness $T_{wet}$ and the length $L_{wet}$ of the polymer electrolyte membrane of the wet state and the thickness $T_{dry}$ and the length $L_{dry}$ of the polymer electrolyte membrane of the dry state in the Equations 1 and 2 above.

The tensile strength and the tensile elongation were measured by stretching a polymer electrolyte membrane having an area of 3 $cm^2$ in the machine direction (MD) or the transverse direction (TD) at a crosshead speed of 500 mm/sec using a 1 kN load cell.

[Table 1]

| | Example 1 | Example 2 | Comparative Example 1 | Comparative Example 2 | Comparative Example 3 |
|---|---|---|---|---|---|
| IP proton conductivity (S/cm, RH 50%) | 0.048 | 0.046 | 0.050 | 0.048 | 0.050 |
| TP proton conductivity (S/cm, RH 50%) | 0.045 | 0.042 | 0.028 | 0.021 | 0.038 |
| Ratio between IP proton conductivity and TP proton conductivity | 1.06 | 1.09 | 1.79 | 2.29 | 1.32 |
| Tensile strength (MPa) (TD/MD) | 74/72 | 48/44 | 36/20 | 46/30 | 35/25 |
| Tensile elongation (%) (TD/MD) | 74/108 | 113/164 | 38/133 | 30/118 | 30/120 |
| Ratio between TD tensile elongation and MD tensile elongation | 1.46 | 1.45 | 3.50 | 3.93 | 4 |
| Swelling ratio (%) (MD/TD/Thickness) | 0/0/6 | 2/2/24 | 9/3/23 | 10/2/26 | 10/3/25 |
| Hydrogen crossover ($cm^2$/sec) | $5.0x10^{-5}$ | $4.8x10^{-5}$ | $5.0x10^{-5}$ | $4.8x10^{-5}$ | $7.3x10^{-5}$ |

Referring to Table 1 above, it can be seen that, in the case of the polymer electrolyte membrane manufactured according to each of the examples, the surface area of the porous support that directly contacted the ion conductor when the porous support was impregnated with the ion conductor was increased, whereby wetting of the porous support due to the solution including the ion conductor was improved, air in pores of the porous support was more easily discharged therefrom when the pores were filled with the ion conductor, whereby generation of microscopic air bubbles was minimized, and therefore impregnation was improved. Consequently, it can be seen that the ratio between the IP proton conductivity and the TP proton conductivity was nearly 1.

Also, in the case of the polymer electrolyte membrane manufactured according to each of the examples, an area capable of buffering dimensional change was increased, since the stacked porous support was included, whereby dimensional stability was also improved. In addition, when observing variation in dimensional stability, it can be seen that there was no substantial difference in MD/TD variation, i.e. the polymer electrolyte membrane was isotropic.

## Claims

1. A method of manufacturing a polymer electrolyte membrane, the method comprising:

casting a first mixed liquid comprising a first ion conductor;
placing a first porous support of a dry state on the first mixed liquid such that the first porous support is entirely brought into a wet state;
adding a second porous support of a dry state on the first porous support immediately after the first porous support is entirely brought into the wet state such that the first and second porous supports are in contact with each other;
applying a second mixed liquid comprising a second ion conductor onto the second porous support such that the second porous support is entirely brought into a wet state; and
drying the first and second porous supports of the wet state.

2. A polymer electrolyte membrane manufactured by the method of claim 1, wherein:

the first porous support has first pores filled with the first ion conductor;
the second porous support has at least one second pore filled with the first ion conductor and third pores filled with the second ion conductor; and
the first and second porous supports are in contact with each other.

3. The polymer electrolyte membrane according to claim 2, wherein all pores of the first porous support are filled with the first ion conductor.

4. The polymer electrolyte membrane according to claim 2, wherein the first porous support further has at least one fourth pore filled with the second ion conductor.

5. The polymer electrolyte membrane according to claim 2, wherein each of the first and second porous supports is an isotropic porous support configured such that machine-direction (MD) tensile elongation and transverse-direction (TD) tensile elongation are equal to each other or the higher of the MD tensile elongation and the TD tensile elongation is 1.5 times or less the lower thereof.

6. The polymer electrolyte membrane according to claim 2, wherein the first and second porous supports are stacked such that directions in which the first and second porous supports haven been drawn are perpendicular to each other.

7. The polymer electrolyte membrane according to claim 2, wherein

at a temperature of 80°C and a relative humidity (RH) of 50%, the polymer electrolyte membrane has an in-plane (IP) proton conductivity of 0.046 S/cm to 0.1 S/cm and a through-plane (TP) proton conductivity of 0.042 S/cm to 0.1 S/cm, and
each of an MD swelling ratio and a TD swelling ratio of the polymer electrolyte membrane calculated by Equation 1 and Equation 2 below after the polymer electrolyte membrane is immersed in distilled water of room-temperature for 12 hours and then dried in a vacuum state at 50°C for 24 hours is 2% or less.

[Equation 1]

$$\Delta L(MD) = [(L_{wet}(MD) - L_{dry}(MD)) / L_{dry}(MD)] \times 100$$

[Equation 2]

$$\Delta L(TD) = [(L_{wet}(TD) - L_{dry}(TD)) / L_{dry}(TD)] \times 100$$

where $\Delta L(MD)$ is an MD swelling ratio, $\Delta L(TD)$ is a TD swelling ratio, $L_{wet}(MD)$ and $L_{wet}(TD)$ are an MD length and a TD length measured immediately before the drying, respectively, and $L_{dry}(MD)$ and $L_{dry}(TD)$ are an MD length and a TD length measured immediately after the drying, respectively,

wherein IP proton conductivity and TP proton conductivity are calculated according to Equations 4 and 5 below,
the IP proton conductivity being determined by using a membrane resistance at a relative humidity of 50%, which is obtained by measuring a membrane resistance at a temperature of 80°C and a relative humidity of 30% to 95% using a magnetic suspension balance (Bell Japan Company), and
the TP proton conductivity being determined by coating opposite surfaces of the polymer electrolyte membrane with Pt catalyst ink, placing and fastening a gas diffusion layer thereon, measuring membrane resistance at a temperature of 80°C and a relative humidity of 50%, and dividing the measured membrane resistance by the thickness of the polymer electrolyte membrane

[Equation 4]

$$(R) = (R_1 - R_2) \times (\text{effective area of membrane})$$

[Equation 5]

$$\text{Proton conductivity (S/cm)} = 1/R \times t$$

where R is membrane resistance [$\Omega \cdot cm^2$], $R_1$ is the resistance [$\Omega$] when a membrane is poured, $R_2$ is the resistance [$\Omega$] when no membrane is poured and t is the thickness of the membrane [cm].

**8.** The polymer electrolyte membrane according to claim 7, wherein the TP proton conductivity and the IP proton conductivity of the polymer electrolyte membrane are equal to each other, or the higher of the TP proton conductivity and the IP proton conductivity is 1.5 times or less the lower thereof.

**9.** The polymer electrolyte membrane according to claim 7, wherein the TD swelling ratio and the MD swelling ratio are equal to each other, or the higher of the TD swelling ratio and the MD swelling ratio is 1.5 times or less the lower thereof.

**10.** The polymer electrolyte membrane according to claim 7, wherein MD tensile strength and TD tensile strength of the polymer electrolyte membrane are equal to each other, or the higher of the MD tensile strength and the TD tensile strength is 1.5 times or less the lower thereof,
wherein the MD tensile strength is measured by stretching the polymer electrolyte membrane having an area of 3 $cm^2$ in machine direction at a crosshead speed of 500 mm/sec using 1 kN load cell, and wherein the TD tensile strength is measured by stretching the polymer electrolyte membrane having an area of 3 $cm^2$ in transverse direction at a crosshead speed of 500 mm/sec using 1 kN load cell.

**11.** The polymer electrolyte membrane according to claim 7, wherein MD tensile elongation and TD tensile elongation of the polymer electrolyte membrane are equal to each other, or the higher of the MD tensile elongation and the TD tensile elongation is 1.5 times or less the lower thereof,
wherein the MD tensile strength is measured by stretching the polymer electrolyte membrane having an area of 3 $cm^2$ in machine direction at a crosshead speed of 500 mm/sec using 1 kN load cell, and wherein the TD tensile strength is measured by stretching the polymer electrolyte membrane having an area of 3 $cm^2$ in transverse direction at a crosshead speed of 500 mm/sec using 1 kN load cell.

**12.** A membrane-electrode assembly comprising:

an anode and a cathode located opposite each other; and
the polymer electrolyte membrane according to claim 2, the polymer electrolyte membrane being located between the anode and the cathode.

**13.** A fuel cell comprising the membrane-electrode assembly according to claim 12.

**Patentansprüche**

**1.** Ein Verfahren zur Herstellung einer Polymerelektrolytmembran, wobei das Verfahren umfasst:

Gießen einer ersten Mischflüssigkeit, die einen ersten Ionenleiter umfasst;
Platzieren eines ersten porösen Trägers in einem trockenen Zustand auf der ersten Mischflüssigkeit, so dass der erste poröse Träger vollständig in einen nassen Zustand überführt wird;
Zugabe eines zweiten porösen Trägers in einem trockenen Zustand auf den ersten porösen Träger unmittelbar nachdem der erste poröse Träger vollständig in den nassen Zustand überführt wurde, so dass der erste und der zweite poröse Träger miteinander in Kontakt stehen;
Aufbringen einer zweiten Mischflüssigkeit, die einen zweiten Ionenleiter umfasst, auf den zweiten porösen Träger, so dass der zweite poröse Träger vollständig in einen nassen Zustand überführt wird; und
Trocknen des ersten und des zweiten porösen Trägers aus dem nassen Zustand.

**2.** Eine Polymerelektrolytmembran, hergestellt durch das Verfahren nach Anspruch 1, wobei:

der erste poröse Träger erste Poren aufweist, die mit dem ersten Ionenleiter gefüllt sind;
der zweite poröse Träger mindestens eine zweite Pore, die mit dem ersten Ionenleiter gefüllt ist, und dritte Poren, die mit dem zweiten Ionenleiter gefüllt sind, aufweist; und der erste und der zweite poröse Träger miteinander in Kontakt stehen.

**3.** Die Polymerelektrolytmembran nach Anspruch 2, wobei alle Poren des ersten porösen Trägers mit dem ersten Ionenleiter gefüllt sind.

**4.** Die Polymerelektrolytmembran nach Anspruch 2, wobei der erste poröse Träger ferner mindestens eine vierte Pore aufweist, die mit dem zweiten Ionenleiter gefüllt ist.

**5.** Die Polymerelektrolytmembran nach Anspruch 2, wobei sowohl der erste als auch der zweite poröse Träger ein isotroper poröser Träger ist, der so ausgelegt ist, dass die Zugdehnung in Maschinenrichtung (MD) und die Zugdehnung in Querrichtung (TD) einander entsprechen oder die höhere aus der MD-Zugdehnung und der TD-Zugdehnung das 1,5-Fache oder weniger der niedrigeren derselben beträgt.

**6.** Die Polymerelektrolytmembran nach Anspruch 2, wobei der erste und der zweite poröse Träger derart gestapelt sind, dass Richtungen, in denen der erste und der zweite poröse Träger gezogen wurden, senkrecht zueinander sind.

**7.** Die Polymerelektrolytmembran nach Anspruch 2, wobei

bei einer Temperatur von 80°C und einer relativen Feuchte (RH) von 50% die Polymerelektrolytmembran eine Protonenleitfähigkeit in der Ebene (IP) von 0,046 S/cm bis 0,1 S/cm und eine Protonenleitfähigkeit quer zur Ebene (TP) von 0,042 S/cm bis 0,1 S/cm aufweist, und
sowohl ein MD-Quellverhältnis als auch ein TD-Quellverhältnis der Polymerelektrolytmembran, berechnet durch nachstehende Gleichung 1 und Gleichung 2, nachdem die Polymerelektrolytmembran für 12 Stunden in destilliertes Wasser bei Raumtemperatur getaucht und anschließend in einem Vakuumzustand bei 50°C für 24 Stunden getrocknet wurde, 2% oder weniger beträgt.

[Gleichung 1]

$$\Delta L\,(MD) = [(L_{nass}\,(MD) - L_{trocken}\,(MD)) / L_{trocken}\,(MD)] \times 100$$

[Gleichung 2]

$$\Delta L\,(TD) = [(L_{nass}\,(TD) - L_{trocken}\,(TD)) / L_{trocken}\,(TD)] \times 100$$

wobei $\Delta L(MD)$ ein MD-Quellverhältnis ist, $\Delta L(TD)$ ein TD-Quellverhältnis ist, $L_{nass}$ (MD) und $L_{nass}$ (TD) eine unmittelbar vor dem Trocknen gemessene MD-Länge bzw. TD-Länge sind und $L_{trocken}$ (MD) und $L_{trocken}$ (TD) eine unmittelbar nach dem Trocknen gemessene MD-Länge bzw. TD-Länge sind,
wobei IP-Protonenleitfähigkeit und TP-Protonenleitfähigkeit gemäß nachstehenden Gleichungen 4 und 5 berechnet werden,
wobei die IP-Protonenleitfähigkeit unter Verwendung eines Membranwiderstands bei einer relativen Feuchte von 50% bestimmt wird, der durch Messen eines Membranwiderstands bei einer Temperatur von 80°C und einer

relativen Feuchte von 30% bis 95% unter Verwendung einer magnetischen Suspensionswaage (Bell Japan Company) ermittelt wird, und
die TP-Protonenleitfähigkeit durch Beschichten gegenüberliegender Oberflächen der Polymerelektrolytmembran mit Pt-Katalysator-Tinte, Platzieren und Befestigen einer Gasdiffusionsschicht darauf, Messen des Membranwiderstands bei einer Temperatur von 80°C und einer relativen Feuchte von 50% und Teilen des gemessenen Membranwiderstands durch die Dicke der Polymerelektrolytmembran bestimmt wird

[Gleichung 4]

$$(R) = (R_1 - R_2) \times (\text{effektive Membranfläche})$$

[Gleichung 5]

$$\text{Protonenleitfähigkeit (S/cm)} = 1/R \times t$$

wobei R der Membranwiderstand [$\Omega \cdot cm^2$] ist, $R_1$ der Widerstand [$\Omega$], wenn eine Membran gegossen wird, ist, $R_2$ der Widerstand [$\Omega$], wenn keine Membran gegossen wird, ist und t die Dicke der Membran [cm] ist.

**8.** Die Polymerelektrolytmembran nach Anspruch 7, wobei die TP-Protonenleitfähigkeit und die IP-Protonenleitfähigkeit der Polymerelektrolytmembran einander entsprechen oder die höhere aus der TP-Protonenleitfähigkeit und der IP-Protonenleitfähigkeit das 1,5-Fache oder weniger der niedrigeren derselben beträgt.

**9.** Die Polymerelektrolytmembran nach Anspruch 7, wobei das TD-Quellverhältnis und das MD-Quellverhältnis einander entsprechen oder das höhere aus dem TD-Quellverhältnis und dem MD-Quellverhältnis das 1,5-Fache oder weniger des niedrigeren derselben beträgt.

**10.** Die Polymerelektrolytmembran nach Anspruch 7, wobei die MD-Zugfestigkeit und die TD-Zugfestigkeit der Polymerelektrolytmembran einander entsprechen oder die höhere aus der MD-Zugfestigkeit und der TD-Zugfestigkeit das 1,5-Fache oder weniger der niedrigeren derselben beträgt,
wobei die MD-Zugfestigkeit gemessen wird, indem die Polymerelektrolytmembran mit einer Fläche von 3 $cm^2$ in Maschinenrichtung bei einer Traversengeschwindigkeit von 500 mm/s unter Verwendung einer 1-kN-Kraftmessdose gedehnt wird, und wobei die TD-Zugfestigkeit gemessen wird, indem die Polymerelektrolytmembran mit einer Fläche von 3 $cm^2$ in Querrichtung bei einer Traversengeschwindigkeit von 500 mm/s unter Verwendung einer 1-kN-Kraftmessdose gedehnt wird.

**11.** Die Polymerelektrolytmembran nach Anspruch 7, wobei die MD-Zugdehnung und die TD-Zugdehnung der Polymerelektrolytmembran einander entsprechen oder die höhere aus der MD-Zugdehnung und der TD-Zugdehnung das 1,5-Fache oder weniger der niedrigeren derselben beträgt,
wobei die MD-Zugfestigkeit durch Dehnen der Polymerelektrolytmembran mit einer Fläche von 3 $cm^2$ in Maschinenrichtung bei einer Traversengeschwindigkeit von 500 mm/s unter Verwendung einer 1-kN-Kraftmessdose gemessen wird und wobei die TD-Zugfestigkeit durch Dehnen der Polymerelektrolytmembran mit einer Fläche von 3 $cm^2$ in Querrichtung bei einer Traversengeschwindigkeit von 500 mm/s unter Verwendung einer 1-kN-Kraftmessdose gemessen wird.

**12.** Eine Membran-Elektroden-Anordnung, umfassend:

eine Anode und eine Kathode, die einander gegenüberliegen; und
die Polymerelektrolytmembran nach Anspruch 2, wobei sich die Polymerelektrolytmembran zwischen der Anode und der Kathode befindet.

**13.** Eine Brennstoffzelle, umfassend die Membran-Elektroden-Anordnung nach Anspruch 12.

## Revendications

**1.** Méthode de fabrication d'une membrane électrolytique polymère, la méthode comprenant :

la coulée d'un premier mélange liquide comprenant un premier conducteur ionique ;
le placement d'un premier support poreux à l'état sec sur le premier mélange liquide de sorte que le premier support poreux soit entièrement porté à l'état humide ;
l'ajout d'un deuxième support poreux à l'état sec sur le premier support poreux immédiatement après que le premier support poreux a été entièrement porté à l'état humide de sorte que les premier et deuxième supports poreux soient en contact l'un avec l'autre ;
l'application d'un deuxième mélange liquide comprenant un deuxième conducteur ionique sur le deuxième support poreux de sorte que le deuxième support poreux soit entièrement porté à l'état humide ; et
le séchage des premier et deuxième supports poreux à l'état humide.

**2.** Membrane électrolytique polymère fabriquée par la méthode selon la revendication 1, dans laquelle :

le premier support poreux a des premiers pores remplis du premier conducteur ionique ;
le deuxième support poreux a au moins un deuxième pore rempli du premier conducteur ionique et des troisièmes pores remplis du deuxième conducteur ionique ; et
les premier et deuxième supports poreux sont en contact l'un avec l'autre.

**3.** Membrane électrolytique polymère selon la revendication 2, dans laquelle tous les pores du premier support poreux sont remplis du premier conducteur ionique.

**4.** Membrane électrolytique polymère selon la revendication 2, dans laquelle le premier support poreux a en outre au moins un quatrième pore rempli du deuxième conducteur ionique.

**5.** Membrane électrolytique polymère selon la revendication 2, dans laquelle chacun des premier et deuxième supports poreux est un support poreux isotrope configuré de sorte que l'allongement à la traction dans la direction machine (MD) et l'allongement à la traction dans la direction transversale (TD) soient égaux l'un à l'autre ou que le plus élevé parmi l'allongement à la traction MD et l'allongement à la traction TD soit de 1,5 fois ou moins le plus faible parmi ceux-ci.

**6.** Membrane électrolytique polymère selon la revendication 2, dans laquelle les premier et deuxième supports poreux sont empilés de sorte que les directions dans lesquelles les premier et deuxième supports poreux ont été étirés soient perpendiculaires l'une à l'autre.

**7.** Membrane électrolytique polymère selon la revendication 2, dans laquelle à une température de 80 °C et à une humidité relative (HR) de 50 %, la membrane électrolytique polymère a une conductivité protonique dans le plan (IP) de 0,046 S/cm à 0,1 S/cm et une conductivité protonique à travers le plan (TP) de 0,042 S/cm à 0,1 S/cm, et

chacun parmi le taux de gonflement MD et le taux de gonflement TD de la membrane électrolytique polymère, calculés par l'Équation 1 et l'Équation 2 ci-dessous après que la membrane électrolytique polymère a été immergée dans de l'eau distillée à température ambiante pendant 12 heures et ensuite séchée sous vide à 50 °C pendant 24 heures, est de 2 % ou moins,

[Équation 1]

$$\Delta L(MD) = [(L_{humide}(MD) - L_{sec}(MD)) / L_{sec}(MD)] \times 100$$

[Équation 2]

$$\Delta L(TD) = [(L_{humide}(TD) - L_{sec}(TD)) / L_{sec}(TD)] \times 100$$

où $\Delta L(MD)$ est le taux de gonflement MD, $\Delta L(TD)$ est le taux de gonflement TD, $L_{humide}(MD)$ et $L_{humide}(TD)$ sont respectivement la longueur MD et la longueur TD mesurées immédiatement avant le séchage, et $L_{sec}(MD)$ et $L_{sec}(TD)$ sont respectivement la longueur MD et la longueur TD mesurées immédiatement après le séchage,
dans laquelle la conductivité protonique IP et la conductivité protonique TP sont calculées conformément aux Équations 4 et 5 ci-dessous,
la conductivité protonique IP étant déterminée par utilisation de la résistance de la membrane à une humidité relative de 50 %, qui est obtenue par mesure de la résistance de la membrane à une température de 80 °C et à une

humidité relative de 30 % à 95 % au moyen d'une balance à suspension magnétique (Bell Japan Company), et la conductivité protonique TP étant déterminée par revêtement des surfaces opposées de la membrane électrolytique polymère avec une encre de catalyseur au Pt, placement et fixation d'une couche de diffusion de gaz sur celles-ci, mesure de la résistance de la membrane à une température de 80 °C et à une humidité relative de 50 %, et division de la résistance mesurée de la membrane par l'épaisseur de la membrane électrolytique polymère,

[Équation 4]

$$(R) = (R_1 - R_2) \times (\text{superficie effective de la membrane})$$

[Équation 5]

$$\text{Conductivité protonique (S/cm)} = 1/R \times t$$

où R est la résistance de la membrane [$\Omega \cdot cm^2$], $R_1$ est la résistance [Ω] lorsqu'une membrane est coulée, $R_2$ est la résistance [Ω] lorsqu'aucune membrane n'est coulée, et t est l'épaisseur de la membrane [cm].

**8.** Membrane électrolytique polymère selon la revendication 7, dans laquelle la conductivité protonique TP et la conductivité protonique IP de la membrane électrolytique polymère sont égales l'une à l'autre, ou bien la plus élevée parmi la conductivité protonique TP et la conductivité protonique IP est de 1,5 fois ou moins la plus faible parmi celles-ci.

**9.** Membrane électrolytique polymère selon la revendication 7, dans laquelle le taux de gonflement TD et le taux de gonflement MD sont égaux l'un à l'autre, ou bien le plus élevé parmi le taux de gonflement TD et le taux de gonflement MD est de 1,5 fois ou moins le plus faible parmi ceux-ci.

**10.** Membrane électrolytique polymère selon la revendication 7, dans laquelle la résistance à la traction MD et la résistance à la traction TD de la membrane électrolytique polymère sont égales l'une à l'autre, ou bien la plus élevée parmi la résistance à la traction MD et la résistance à la traction TD est de 1,5 fois ou moins la plus faible parmi celles-ci, dans laquelle la résistance à la traction MD est mesurée par étirement de la membrane électrolytique polymère ayant une superficie de 3 $cm^2$ dans la direction de machine à une vitesse de déplacement de la traverse de 500 mm/sec utilisant une cellule de charge de 1 kN, et dans laquelle la résistance à la traction TD est mesurée par étirement de la membrane électrolytique polymère ayant une superficie de 3 $cm^2$ dans la direction transversale à une vitesse de déplacement de la traverse de 500 mm/sec utilisant une cellule de charge de 1 kN.

**11.** Membrane électrolytique polymère selon la revendication 7, dans laquelle l'allongement à la traction MD et l'allongement à la traction TD de la membrane électrolytique polymère sont égaux l'un à l'autre, ou bien le plus élevé parmi l'allongement à la traction MD et l'allongement à la traction TD est de 1,5 fois ou moins le plus faible parmi ceux-ci,
dans laquelle la résistance à la traction MD est mesurée par étirement de la membrane électrolytique polymère ayant une superficie de 3 $cm^2$ dans la direction de machine à une vitesse de déplacement de la traverse de 500 mm/sec utilisant une cellule de charge de 1 kN, et dans laquelle la résistance à la traction TD est mesurée par étirement de la membrane électrolytique polymère ayant une superficie de 3 $cm^2$ dans la direction transversale à une vitesse de déplacement de la traverse de 500 mm/sec utilisant une cellule de charge de 1 kN.

**12.** Assemblage membrane-électrodes comprenant :

une anode et une cathode situées à l'opposé l'une de l'autre ; et
la membrane électrolytique polymère selon la revendication 2, la membrane électrolytique polymère étant située entre l'anode et la cathode.

**13.** Pile à combustible comprenant l'assemblage membrane-électrodes selon la revendication 12.

# FIG. 1

B
12
11
A

# FIG. 2

10
12
11

# FIG. 3

1
31
12
10
11
21
30
20

# FIG. 4

3.26um
20.39um
12.57um
4.15um
SE
WD24.3mm 5.0kV x2.0k 20um

FIG. 5

2.800μm
2.468μm
12.942μm
SEI 15kV WD24mm SS40 x3,000 5μm
Sample 0000 19 Apr 2018

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2007087245 A
- US 2003059657 A
- KR 20140085885